# EUROPÄISCHE PATENTSCHRIFT

(11) **EP 2 126 397 B1**
(45) Veröffentlichungstag und Bekanntmachung des Hinweises auf die Patenterteilung: **14.03.2012**
(21) Anmeldenummer: 08708062.8
(22) Anmeldetag: 22.01.2008
(51) Int. Cl.: F16D 65/097, F16D 55/00

(54) **BREMSBELAGHALTERUNG EINER SCHEIBENBREMSE**
BRAKE LINING MOUNTING FOR A DISC BRAKE
SUPPORT DE GARNITURE DE FREIN ET FREIN À DISQUE

(30) Priorität: 26.01.2007 DE 102007004009
(43) Veröffentlichungstag der Anmeldung: 02.12.2009
(73) Patentinhaber: KNORR-BREMSE Systeme für Nutzfahrzeuge GmbH, 80809 München (DE)
(72) Erfinder: SALAPIC, Borislav, 80636 München (DE)
(74) Vertreter: Mattusch, Gundula
(86) Internationale Anmeldenummer: PCT/EP2008/050696
(87) Internationale Veröffentlichungsnummer: WO 2008/090147

(56) Entgegenhaltungen:
- EP-A- 1 275 870
- EP-A- 1 798 437
- WO-A-2005/036010
- DE-C1- 19 935 036

## Beschreibung

Die Erfindung betrifft eine Bremsbelaghalterung einer Scheibenbremse gemäß dem Oberbegriff des Anspruchs 1.

Eine gattungsgemäße Bremsbelaghalterung ist beispielsweise aus der DE 40 20 287 Al bekannt.

Zur Positionssicherung der beiden Bremsbeläge sind diese jeweils mit einer Belaghaltefeder versehen, die als Blattfeder ausgebildet und im oberen, einer Montageöffnung des Bremssattels zugewandten Randbereich derart am Bremsbelag befestigt ist, dass sie von einem sich quer dazu, also in Achsrichtung der Bremsscheibe erstreckenden Haltebügel unter Vorspannung gesetzt werden. Dabei ist der Haltebügel in zwei sich gegenüberliegenden, die Montageöffnung begrenzenden Bereichen des Bremssattels festgelegt.

Die Positionierung der Bremsbeläge unter Federspannung dient einem Toleranzausgleich ebenso wie einer Reduzierung bzw. einer Verhinderung der Entstehung von Klappergeräuschen, wie sie ansonsten im Fahrbetrieb des Fahrzeuges auftreten würden.

Die bekannte Bremsbelaghalterung ist so ausgebildet, dass die jeweilige Belaghaltefeder an Haltelaschen des zugeordneten Bremsbelages befestigt sind, die entsprechende Ausnehmungen der Belaghaltefeder durchtreten, wobei diese in radialer Richtung gehalten wird und zwar so, dass ein selbsttätiges Lösen in entspannter oder teilentspannter Lage ausgeschlossen ist.

Da zur Festlegung der Belaghaltefeder lediglich zwei Anbindungsstellen vorgesehen sind, die abständig zueinander angeordnet sind, wird die Belaghaltefeder auch als Griff benutzt und dabei mittig gefasst, so dass sie im Sinne eines zweiseitig eingespannten Trägers fungiert, mit der Neigung einer entsprechend starken Durchbiegung.

Unter Umständen kann sich durch diese Verformung die Federcharakteristik der Belaghaltefeder verändern, was sich dann nachteilig in der Funktion auswirkt.

Durch die beim Bremsen entstehende Reibungswärme ergibt sich eine geometriebedingte Wärmebelastung der Belaghaltefedern, die deren Federcharakteristik in nicht vorhersehbarem Umfang beeinflusst. Darüber hinaus ergibt sich durch die Blattform der Belaghaltefedern, die mit ihrer Breitseite am Belaghaltebügel anliegen, ein relativ großer Reibungswiderstand bei der Verschiebung der Bremsbeläge, was ebenfalls eine Beeinträchtigung der Funktionsfähigkeit der Belaghaltefedern zur Folge haben kann.

In der DE 199 35 036 C1 ist eine Bremsbelaghalterung geoffenbart, die gänzlich auf einen Belaghaltebügel verzichtet und für beide Bremsbeläge eine gemeinsame Belaghaltefeder aufweist, die sich über Abstützelemente an den Bremsbelägen abstützt und die in einem fahrzeugseitigen Bremsträger gehalten ist. Über ein Drehlagerblech, das ebenfalls am Bremsträger befestigt ist, ist die Belaghaltefeder schwenkbar.

Der Erfindung liegt daher die Aufgabe zugrunde, ein Bremsbelaghalterung der gattungsgemäßen Art so weiterzuentwickeln, dass eine kostengünstigere Herstellung möglich ist, die Standzeit insbesondere der Belaghaltefedern erhöht und die Funktionssicherheit verbessert wird.

Diese Aufgabe wird durch eine Bremsbelaghalterung mit den Merkmalen des Anspruchs 1 gelöst.

Diese konstruktive Ausbildung der Belaghaltefeder einerseits und des Belaghaltebügels andererseits führen zu einer ganzen Reihe von Vorteilen, sowohl in wirtschaftlicher wie auch in funktioneller Hinsicht.

So ist die Herstellung der neuen Belaghaltefedern kostengünstiger als die bislang eingesetzten, wozu insbesondere eine vereinfachte Befestigung am jeweils zugeordneten Bremsbelag zählt. Dabei kann auf die Ausstanzung von Durchbrechungen verzichtet werden, in die bislang Laschen des jeweiligen Bremsbelages eingriffen.

Gerade unter dem Aspekt, dass Bremsbelaghalterungen als ein Bestandteil von Scheibenbremsen in großen Stückzahlen zum Einsatz kommen, kommt der vereinfachten Herstellung eine besondere Bedeutung zu, da sie sich in bemerkenswerter Weise kostenmindernd auswirkt.

Daneben ist die verbesserte Funktionssicherheit der Bremsbelaghalterung als besonderer Vorteil der Erfindung hervorzuheben, die sich durch die verminderte Wärmebeaufschlagung der Belaghaltefedern ergibt. Diese resultiert aus der nun gegebenen Geometrie der Belaghaltefeder, insbesondere des Querschnitts, der bevorzugt rund ist.

Aus dieser geringeren Wärmebeaufschlagung minimiert sich die Gefahr von Federbrüchen, mit der Folge einer erhöhten Standzeit.

Da die Berührungsflächen des Belaghaltebügels mit den Belaghaltefedern durch den vorzugsweise runden Querschnitt der Belaghaltefeder kleinstmöglich sind, d.h., sich prinzipiell nur als Berührungslinien darstellen, ist auch die beim Verschieben des Bremssattels aufzubringende Kraft zur Überwindung der Reibung zwischen dem Belaghaltebügel und den Belaghaltefedern entsprechend reduziert, woraus sich, ebenfalls aufgrund der verbesserten Standzeit, gleichfalls eine Erhöhung der Funktionssicherheit einerseits und ein wirtschaftlicher Vorteil andererseits ergibt.

Grundsätzlich ist der Querschnitt des Federdrahtes frei wählbar, d.h., neben der genannten Kreisform auch eine davon abweichende, beispielsweise ovale oder polygone Form. Erfindungsgemäß ist in jedem Fall der Anlagebereich des Belaghaltebügels an der jeweiligen Belaghaltefeder an deren Querschnittskontur angepasst.

Hierdurch wird einer Verwechselungsgefahr bei der Montage der gesamten Bremsbelaghalterung entgegengewirkt. Insofern ist eine Kodierung geschaffen, durch die verhindert wird, dass vor allem bei einem Bremsbelagwechsel ein nicht für diese Bremse konzipierter Bremsbelag eingebaut wird.

Beispielsweise ist es nun nicht möglich, einen bekannten, mit einer Blattfeder als Belaghaltefeder versehenen Bremsbelag funktionssicher einzubauen. Naturgemäß erhöht dies die Betriebssicherheit der Scheibenbremse insgesamt, wobei insbesondere verhindert wird, dass unbeabsichtigt nicht geeignete Bremsbeläge montiert werden.

Nach einer vorteilhaften Weiterbildung der Erfindung ist vorgesehen, dass der Belaghaltebügel aus einem entsprechend gebogenen Draht bzw. einem Rundstahl besteht, der zwei parallel und abständig zueinander verlaufende, die Montageöffnung überspannende Schenkel aufweist, die sich jeweils an den Belaghaltefedern abstützen.

Anstelle eines Drahtes kann als Grundmaterial für den Belaghaltebügel wie bislang ein Blechformteil oder ein Flachstahl zum Einsatz kommen.

Weitere vorteilhafte Ausbildungen der Erfindung sind in den Unteransprüchen gekennzeichnet.

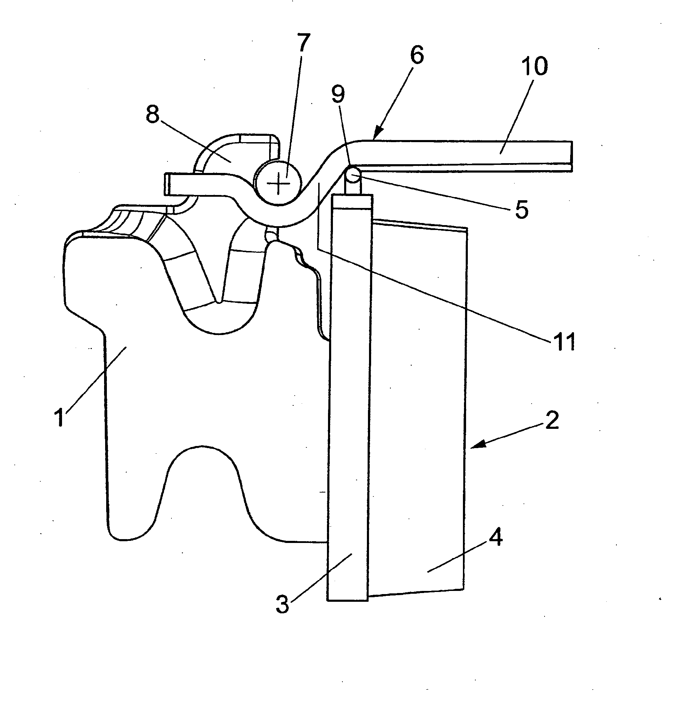

Ein Ausführungsbeispiel der Erfindung wird nachfolgend anhand der beigefügten Zeichnung beschrieben.

Die einzige Figur zeigt einen Teilausschnitt einer erfindungsgemäßen Bremsbelaghalterung in einer Seitenansicht.

In der Figur ist eine Bremsbelaghalterung einer Scheibenbremse, insbesondere für ein Nutzfahrzeug, dargestellt. Dabei sind beidseitig einer nicht gezeigten Bremsscheibe zugeordnete Bremsbeläge 2 vorgesehen, von denen einer in der Figur erkennbar ist.

Dieser Bremsbelag 2, bestehend aus einer Belagträgerplatte 3 und einem daran befestigten, die Bremsscheibe im Funktionsfall kontaktierenden Reibbelag 4, ist federbelastet in einem Belagschacht eines ortsfesten Bremsträgers gehalten, wozu in einem oberen Randbereich der Belagträgerplatte 3 eine aus einem Federdraht bestehende Belaghaltefeder 5 befestigt ist, an der sich ein Belaghaltebügel 6 abstützt.

Dieser Belaghaltebügel 6 verläuft in seiner Längsausrichtung quer zur Längserstreckung der Belaghaltefeder 5, die im Ausführungsbeispiel einen kreisrunden Querschnitt aufweist. Mit seinen beiden Enden ist der Belaghaltebügel 6 an einem Bremssattel 1 befestigt, wobei ein Ende des Belaghaltebügels 6 dargestellt ist, das in eine Aufnahme 8 des Bremssattels 1 ragt und durch ein Arretierelement 7 in seiner Position gehalten ist.

Im Anlagebereich 9 mit der Belaghaltefeder 5 ist der Belaghaltebügel 6 an die Querschnittskontur der Belaghaltefeder 5 angepasst. Im vorliegenden Beispiel ist somit der Anlagebereich 9 kurvenförmig ausgebildet, entsprechend der Krümmung der Belaghaltefeder 5, d.h., entsprechend deren Radius'.

Der Belaghaltebügel 6 weist dabei einen sich in Achsrichtung der nicht dargestellten Bremsscheibe erstreckenden Schenkel 10 auf, an dessen Ende sich ein abgewinkelter Schenkel 11 anschließt, der nach unten hin, also in Richtung des Bremssattels 1 schräg verlaufend ausgerichtet ist, während der Übergangsbereich vom geraden Schenkel 10 zum abgewinkelten Schenkel 11 durch die Anlagefläche 9 gebildet ist. Der Anlagebereich 9 erstreckt sich in einem Winkelbereich von 15 bis 80°, vorzugsweise 30 bis 60°.

Es ist deutlich erkennbar, dass aufgrund der an die Querschnittskontur der Belaghaltefeder 5 angepassten Kontur der Anlagefläche 9 nur die entsprechende Belaghaltefeder 5 einsetzbar ist, während beispielsweise eine Blattfeder als Belaghaltefeder 5 keine sinnvolle Befestigung des Belaghaltebügels zulässt.

## Patentansprüche

1. Bremsbelaghalterung einer Scheibenbremse, insbesondere für ein Nutzfahrzeug, wobei beidseitig einer Bremsscheibe zugeordnete Bremsbeläge (2) mittels jeweils einer Belaghaltefeder (5) federbelastet in einem Belagschacht eines ortsfesten Bremsträgers oder Bremssattels (1) gehalten sind, an denen sich ein sich in Achsrichtung der Bremsscheibe erstreckender, am Bremssattel (1) befestigter und eine Montageöffnung des Belagschachtes überbrückender Belaghaltebügel (6) abstützt, **dadurch gekennzeichnet, dass** die Belaghaltefedern (5) jeweils aus einem Federdraht bestehen und der Belaghaltebügel (6) im Anlagebereich (9) mit mindestens einer Belaghaltefeder (5) an deren Querschnittskontur angepasst ist.

2. Bremsbelaghalterung nach Anspruch 1, **dadurch gekennzeichnet, dass** die Belaghaltefeder (5) einen runden, ovalen oder polygonen Querschnitt aufweist.

3. Bremsbelaghalterung nach Anspruch 1 oder 2, **dadurch gekennzeichnet, dass** der Anlagebereich (9) im Übergangsbereich zwischen einem sich in Achsrichtung der Bremsscheibe erstreckenden geraden Schenkel (10) und einem sich anschließenden, in Richtung des Bremssattels abgewinkelten Schenkel (11) vorgesehen ist.

4. Bremsbelaghalterung nach einem der vorhergehenden Ansprüche, **dadurch gekennzeichnet, dass** der Anlagebereich (9) sich über einen Winkel von 15 bis 80° erstreckt.

5. Bremsbelaghalterung nach einem der vorhergehenden Ansprüche, **dadurch gekennzeichnet, dass** sich der Anlagebereich (9) über einen Winkel von 30 bis 60° erstreckt.

6. Bremsbelaghalterung nach einem der vorhergehenden Ansprüche, **dadurch gekennzeichnet, dass** der Belaghaltebügel (6) aus einem Rundstahl gebildet ist.

7. Bremsbelaghalterung nach einem der vorhergehenden Ansprüche, **dadurch gekennzeichnet, dass** der Belaghaltebügel (6) zwei parallel und abständig zueinander verlaufende, sich in Achsrichtung der Bremsscheibe erstreckende Schenkel aufweist, die zumindest an einem Ende miteinander verbunden sind, das in einer Aufnahme (8) des Bremssattels (1) gehalten ist.

## Claims

1. Brake pad holder of a disc brake, in particular for a utility vehicle, wherein brake pads (2) assigned on both sides to a disc brake are held by means of a respective pad holding spring (5) in a spring loaded manner in a pad shaft of a location secure brake carrier or brake calliper (1), on which a pad retaining clip (6) extending in axial direction of the brake disc, fixed to the brake calliper (1) and bridging over an assembly opening of the pad shaft is supported, **characterised in that** the pad holding springs (5) respectively consist of a spring wire and the pad retaining clip (6) is adapted in the abutment region (9) with at least one pad holding spring (5) to the cross-sectional contour thereof.

2. Brake pad holder according to claim 1, **characterised in that** the pad holding spring (5) has a round, oval or polygonal cross-section.

3. Brake pad holder according to claim 1 or 2, **characterised in that** the abutment region (9) is provided in the transition region between a straight limb (10) extending in axial direction of the brake disc and a connecting limb (11) which is angled down in the direction of the brake calliper.

4. Brake pad holder according to one of the preceding claims, **characterised in that** the abutment region (9) extends at an angle of 15 to 80°.

5. Brake pad holder according to one of the preceding claims, **characterised in that** the abutment region (9) extends at an angle of 30 to 60°.

6. Brake pad holder according to one of the preceding claims, **characterised in that** the pad retaining clip (6) is formed from a round steel.

7. Brake pad holder according to one of the preceding claims, **characterised in that** the pad retaining clip (6) comprises two limbs extending in parallel and at a distance from each other in the axial direction of the brake disc which are connected to each other at at least one end which is held in a recess (8) of the brake calliper (1).

## Revendications

1. Support de garniture d'un frein à disque, notamment pour un véhicule utilitaire, dans lequel des garnitures (2) de frein associées des deux côtés à un disque de frein sont maintenues, au moyen respectivement d'un ressort (5) de maintien de garniture, en étant chargées par un ressort dans un puits de garniture d'un support de frein fixe ou d'un étrier (1) de frein, sur lesquelles s'appuie un archet (6) de maintien de garniture, s'étendant dans la direction axiale du disque de frein, fixé à l'étrier (1) de frein et enjambant une ouverture de montage du puits de garniture, **caractérisé en ce que** les ressorts (5) de maintien de la garniture sont constitués d'un fil pour ressort et l'archet (6) de maintien de la garniture est adapté dans la zone (9) d'application, par au moins un ressort (5) de maintien de la garniture, à son contour en section transversale.

2. Support de garniture de frein suivant la revendication 1, **caractérisé en ce que** le ressort (5) de maintien de la garniture a une section transversale, circulaire, ovale ou polygonale.

3. Support de garniture de frein suivant la revendication 1 ou 2, **caractérisé en ce que** la zone (9) d'application est prévue dans la zone de transition entre une branche (10) droite s'étendant dans la direction de l'axe du disque de frein et une branche (11) s'y raccordant et coudée dans la direction de l'étrier de frein.

4. Support de garniture de frein suivant l'une des revendications précédentes, **caractérisé en ce que** la zone (9) d'application s'étend sur un angle de 15 à 80°.

5. Support de garniture de frein suivant l'une des revendications précédentes, **caractérisé en ce que** la zone (9) d'application s'étend sur un angle de 30 à 60°.

6. Support de garniture de frein suivant l'une des revendications précédentes, **caractérisé en ce que** l'archet (6) de maintien de la garniture est en acier de section circulaire.

7. Support de garniture de frein suivant l'une des revendications précédentes, **caractérisé en ce que** l'archet (6) de maintien de la garniture a deux branches parallèles et s'étendant à distance l'une de l'autre dans la direction de l'axe du disque de frein, qui sont reliées entre elles au moins à une extrémité qui est maintenue dans un logement (8) de l'étrier (1) de frein.
